# EUROPÄISCHE PATENTSCHRIFT

(11) **EP 2 017 474 B1**
(45) Veröffentlichungstag und Bekanntmachung des Hinweises auf die Patenterteilung: **11.06.2014**
(21) Anmeldenummer: 08002608.1
(22) Anmeldetag: 13.02.2008
(51) Int. Cl.: F01D 11/00, F03D 11/00, F16H 57/021, F03D 11/02, F16H 57/08

(54) **Getriebe für eine Windenergieanlage**
Transmission for a wind turbine
Engrenage pour une éolienne

(30) Priorität: 17.07.2007 DE 102007033806
(43) Veröffentlichungstag der Anmeldung: 21.01.2009
(73) Patentinhaber: NORDEX Energy GmbH, 22419 Hamburg (DE)
(72) Erfinder: Nitzpon, Joachim, 20255 Hamburg (DE)
(74) Vertreter: Schildberg, Peter

(56) Entgegenhaltungen:
- EP-A1- 1 553 315
- CN-A- 101 191 532
- DE-A1- 19 916 454
- JP-A- 2006 207 623

## Beschreibung

Die vorliegende Erfindung betrifft ein Getriebe für eine Windenergieanlage und insbesondere die Lagerung eines Planetenträgers in dem Getriebe einer Windenergieanlage.

Aus DE 103 57 026 B3 ist bekannt, den Rotor über eine hohle Rotorwelle mit einem einstufigen oder mehrstufigen Planetengetriebe zu verbinden. Der Planetenträger ist über zwei Lager in dem Gehäuse des Getriebes gelagert. Die Lager befinden sich dabei antriebs- und abtriebsseitig von einem im Gehäuse des Getriebes fest angeordneten Hohlrad.

Aus DE 199 16 453 A1 ist eine Windenergieanlage bekannt, bei der ein zweistufiges Planetengetriebe mit einer Antriebsstufe und einer Abtriebsstufe vorgesehen ist. Der Planetenträger der Antriebsstufe ist auf dem Maschinenträger bzw. dem Rotorträger abgestützt und wirkt somit als Drehmomentstütze.

Aus EP 0 792 415 B1 ist ein Planetengetriebe für eine Windkraftanlage bekannt, bei dem ein in einem Getriebegehäuse gelagerter Planetenträger mit einer Antriebswelle verbunden ist. Die Antriebswelle bzw. ein Ende dieser ist dabei über den Planetenträger im Getriebegehäuse gelagert, wobei die Antriebswelle belastende Querkräfte über die Lager des Planetenträgers in das Getriebegehäuse eingeleitet werden. Die Lagerung des Planetenträgers erfolgt hierbei sowohl antriebs- als auch abtriebsseitig der Planeten.

Aus DE 199 16 545 A1 ist ein Getriebe für eine Windkraftanlage bekannt, dass ein zweistufiges Planetengetriebe aufweist, und dass den Oberbegriff des Anspruchs 1 offenbart. Der Planetenträger ist über zwei Wälzlager, die gleichzeitig auch der Lagerung des Rotors dienen, in einem Getriebegehäuse fixiert. Über die beiden großen Wälzlager werden die gesamten, an den Rotorblättern angreifenden Windkräfte auf das Gehäuse des Generators übertragen.

Der Erfindung liegt die Aufgabe zugrunde, ein Getriebe für eine Windenergieanlage bereitzustellen, bei dem über den Planetenträger eine einfache Wellennabenverbindung ohne zusätzliche Bauteile realisiert werden kann.

Erfindungsgemäß wird die Aufgabe durch ein Getriebe mit den Merkmalen des Anspruchs 1 gelöst. Vorteilhafte Ausgestaltungen bilden den Gegenstand der Unteransprüche.

Die vorliegende Erfindung betrifft ein Getriebe für eine Windenergieanlage. Das Getriebe ist als ein ein- oder mehrstufiges Planetengetriebe ausgebildet, das einen Planetenträger besitzt. Der Planetenträger ist antriebsseitig mit einer Rotorwelle oder einer Rotornabe verbunden und über ein Lager gelagert, das innerhalb des Getriebegehäuses für den Planetenträger vorgesehen ist. Dabei kann der Planetenträger im Getriebegehäuse oder das Getriebegehäuse auf dem Planetenträger gelagert sein. Erfindungsgemäß ist das Lager abtriebsseitig der Planeten des Planetenträgers in dem Getriebegehäuse angeordnet. Die abtriebsseitige Position des Lagers für den Planetenträger bietet eine Reihe von besonderen Vorteilen. Bei einem bekannten Planetenträger, der an- und abtriebsseitig im Getriebegehäuse gelagert ist, muß das antriebsseitige Lager mit einem großen Innendurchmesser versehen sein, wodurch sich der Aufwand für das Lager erhöht. Alternativ kann auch eine Nabenverbindung eingesetzt werden, die auf einem geringen Durchmesser große Drehmomente übertragen kann. Solche Wellennabenverbindungen sind aufwendig und bauen groß. Im übrigen sind sie risikoreich in der Herstellung und Montage, was letztendlich auf die Kosten durchschlägt. Erfindungsgemäß ist die Verwendung eines kompakten Momentenlagers abtriebsseitig des Planetenträgers vorgesehen, das zur Aufnahme aller zwischen Planetenträger und Getriebegehäuse wirkenden Momente und Querkräfte dient. Hierdurch entsteht auch als besonderer Vorteil die Möglichkeit, antriebsseitig jede beliebige Rotorwellen- oder Rotornaben-Anbindung realisieren zu können. Eine mit dem erfindungsgemäß gelagerten Planetenträger verbundene Rotorwelle oder -nabe ist in an sich bekannter Weise außerhalb des Getriebes gelagert.

Bevorzugt handelt es sich bei dem Planetengetriebe um ein mehrstufiges Planetengetriebe, wobei als der erfindungsgemäß gelagerte Planetenträger ein Planetenträger der ersten Stufe vorgesehen ist.

Als Momentenlager kann bevorzugt ein eingestelltes Kegelrollenlagerpaar vorgesehen sein. Alternativ ist auch möglich, als Momentenlager ein dreireihiges Zylinderrollenlager vorzusehen. Grundsätzlich sind auch andere Ausführungsarten für das Lager denkbar, wenn das Lager ein Stützmoment bei gleichzeitiger axialer und radialer Führung bereitstellt.

In einer bevorzugten Ausgestaltung ist eine direkte Anbindung der Rotorwelle an den Planetenträger vorgesehen. Bei der direkten Anbindung ist zweckmäßigerweise ein Flansch formschlüssig an die Rotorwelle angebunden, mit dem der Planetenträger verschraubt ist. Alternativ hierzu kann eine Adapterscheibe zur direkten Anbindung der Rotornabe an den Planetenträger vorgesehen sein.

In einer zweckmäßigen Ausgestaltung ist die Adapterscheibe mit dem Planetenträger verschraubt, wobei die mit der Adapterscheibe verbundene Rotornabe über ein Momentenlager auf einer Tragkonstruktion gelagert ist. Als Tragkonstruktion kann beispielsweise der Maschinenträger dienen, auf dem auch das Getriebe gelagert ist.

Bevorzugte Ausführungsbeispiele der erfindungsgemäßen Lagerung werden nachfolgend anhand von Ausführungsbeispielen näher erläutert. Es zeigt:
- Fig. 1: das erfindungsgemäße Getriebe mit einer zweifach gelagerten Rotorwelle in einer Schnittansicht im Detail,
- Fig. 2: ein erfindungsgemäß ausgeführtes Getriebe, das fest mit einem Maschinenträger oder einem Lagergehäuse einer Lagerung der Rotorwelle verschraubt ist in einer Schnittansicht im Detail,
- Fig. 3: ein erfindungsgemäßes Getriebe, dessen Gehäuse mit einem Maschinenträger verschraubt ist, wobei die Lagerung der R otor- welle ebenfalls über ein Momentenlager erfolgt, in einer Schnitt- ansicht im Detail,
- Fig. 4: ein erfindungsgemäßes Getriebe, bei dem die zweifachgelagerte Rotorwelle über einen Rotorwellenflansch mit dem Planetenträger verbunden ist, in einer Schnittansicht im Detail,
- Fig. 5: ein erfindungsgemäßes Getriebe und eine Lagerung des Rotors über ein Momentenlager an einem Maschinenträger,
- Fig. 6: die herkömmliche Lagerung des Planetenträgers in einem Getriebe für eine Windenergieanlage und
- Fign. 7a u. 7b zwei: Detailansichten zu unterschiedlich ausgeführten Planeten- trägern.

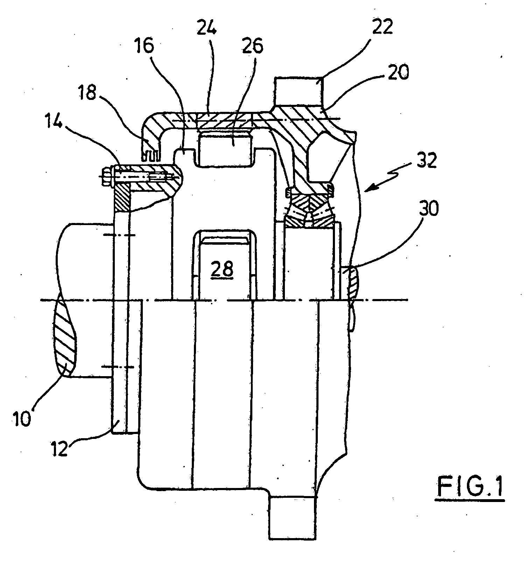

Figur 1 zeigt in einem Schnitt eine Rotorwelle 10, die außerhalb des Getriebes zweifach mit einem ein- oder zweiteiligen Rotorlagergehäuse gelagert ist (nicht dargestellt). Das ins Getriebe weisende Ende der Rotorwelle 10 besitzt einen Rotorwellenflansch 12, der formschlüssig mit der Rotorwelle verbunden ist. Der Rotorwellenflansch 12 ist über eine Schraubverbindung 14 mit einem Planetenträger 16 verbunden. Der Getriebeinnenraum ist über ein schematisch dargestelltes Dichtsystem 18 gegenüber der Umgebung abgedichtet. Das als mehrstufiges Planetengetriebe ausgeführte Getriebe besitzt ein Getriebegehäuse 20 mit einer Momentenstütze 22. Ebenfalls in Figur 1 zu erkennen ist das in das Gehäuse 20 integrierte Hohlrad 24 und zwei der Planeten 26, 28. Die Sonnenwelle 30 führt zu der Sonne (nicht dargestellt) in der ersten Stufe des Getriebes.

Der Planetenträger 16 ist über ein Momentenlager 32 in dem Gehäuse 20 des Getriebes gelagert. Das Momentenlager 32 befindet sich auf der Abtriebsseite des Planetenträgers 16 und ist in dem dargestellten Ausführungsbeispiel als eingestelltes Kegelrollenlagerpaar ausgeführt.

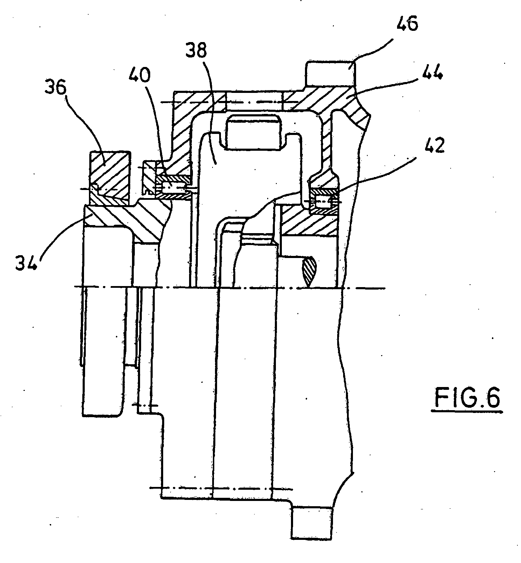

Die Besonderheit der erfindungsgemäßen Lagerung wird deutlich bei einem Vergleich mit der in Figur 6 dargestellten herkömmlichen Lagerung des Planetenträgers. Die Figur 6 zeigt eine hohle Welle 34 am Planetenträger, die über eine Schrumpfscheibe 36 zur Verbindung mit der Rotorwelle vorgesehen ist. Der Planetenträger 38 ist antriebsseitig über ein Zylinderrollenlager 40 und abtriebsseitig über ein weiteres Zylinderrollenlager 42 in dem Gehäuse 44 gelagert. Das Gehäuse 44 ist ebenso wie das in Figur 1 dargestellte Beispiel mit einer Momentenstütze 46 am Maschinenträger über Entkoppelungselemente (nicht dargestellt) abgestützt. Die zwei Zylinderrollenlager können auch durch zwei Kegelrollenlager in X-Anordnung ersetzt werden, die eingestellt sind und eine Stützweite zur Aufnahme der Momente aufweisen.

Wie in Figur 6 dargestellt, wird im Stand der Technik bei der Lagerung des Planetenträgers der ersten Stufe für das Getriebe einer Windenergieanlage das Getriebegehäuse bei einem Aufsteckgetriebe auf dem drehenden Planetenträger gelagert (vgl. Lager 40, 42 in Figur 6). Auch weitere Getriebestufen (nicht dargestellt in Figur 6) werden mit ihren Lagerstellen im Getriebegehäuse indirekt über die Lager 40 und 42 auf dem Planetenträger gelagert. Dies führt dazu, daß antriebsseitig entweder Lager mit großem Innendurchmesser vorgesehen werden müssen oder alternativ eine Wellennabenverbindung eingesetzt werden muß, die auf einem möglichst geringen Durchmesser große Drehmomente übertragen kann. Solche Wellennabenverbindungen sind im Stand der Technik bekannt, bauen jedoch groß und sind schwer. Im übrigen sind sie aufwendig und risikoreich in der Herstellung und der Montage, so daß sie insgesamt als kostenintensiv zu bewerten sind.

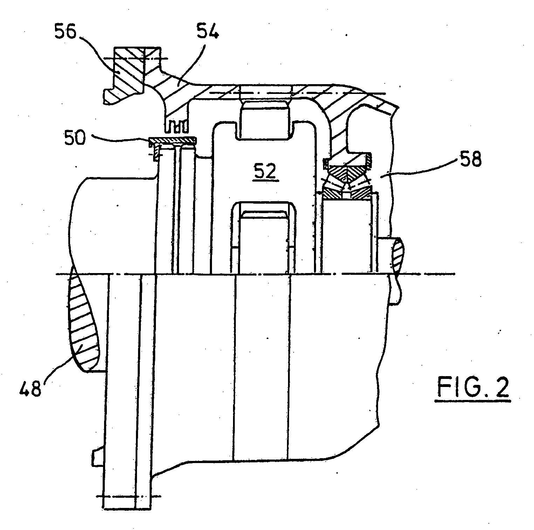

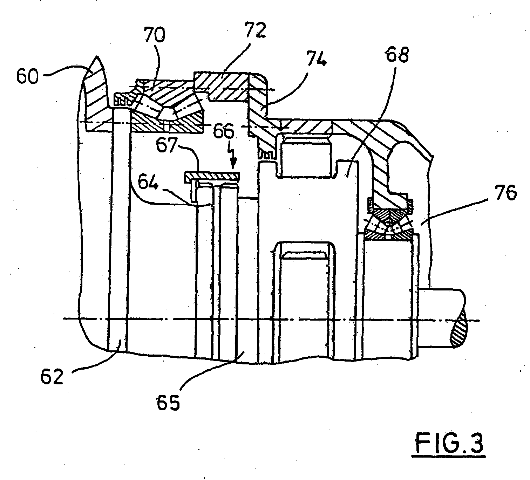

Das in Figur 1 dargestellte Ausführungsbeispiel der Erfindung macht deutlich, daß die Verwendung eines kompakten Momentenlagers abtriebsseitig des Planetenträgers die Möglichkeit schafft, antriebsseitig eine beliebige Rotorwellenanbindung zu realisieren. Das Momentenlager nimmt dabei die zwischen Planetenträger und Getriebegehäuse wirkenden Kräfte auf. Bei den nachfolgend noch zu beschreibenden Ausführungsbeispielen sind bei den Ausführungen mit einer Zahnkupplung gemäß Fig. 2 und 3 die wirkenden Kräfte überwiegend die Gewichtskräfte des Planetenträgers. Bei einer reibschlüssigen Verbindung zwischen Planetenträger und Rotorwelle oder Rotornabe sind die wirkenden Kräfte die Gewichtskräfte des übrigen Getriebes und die aus Verformungen des Maschinenträgers unter Last resultierenden Kräfte.

Ein weiteres Ausführungsbeispiel für die erfindungsgemäße Lagerung des Planetenträgers ist in Figur 2 dargestellt. Figur 2 zeigt in einer geschnittenen Ansicht eine Rotorwelle 48, die über eine Zahnkupplung 50 mit dem Planetenträger 52 verbunden ist. Das Getriebegehäuse 54 ist in dem in Figur 2 dargestellten Ausfiihrungsbeispiel fest mit einem Bauteil 56 verbunden. Bei dem Bauteil 56 kann es sich entweder um den Maschinenträger handeln oder um ein einteiliges Lagergehäuse einer (nicht dargestellten) Rotorlagerung. Bei dem in Figur 2 dargestellten Ausführungsbeispiel ist das Getriebegehäuse 54 nicht gummiert gelagert, sondern starr gelagert und etwaig auftretende Relativbewegungen werden über die Zahnkupplung 50 ausgeglichen. Der Planetenträger 52 ist über ein Momentenlager 58 in dem Gehäuse 54 gelagert.

Figur 3 zeigt ein weiteres Ausführungsbeispiel, bei dem das Getriebe mit einer Tragstruktur fest verschraubt ist und eine Lagerung der Rotorwelle ebenfalls über ein Momentenlager erfolgt. Figur 3 zeigt eine Rotornabe 60, die mit einer Adapterwelle 62 verbunden ist. Die Adapterwelle 62 besitzt an ihrem zum Getriebe weisenden Ende eine außenliegende Steckverzahnung 64. Über eine Zahnkupplung 66 ist die Adapterwelle 62 an den Planetenträger 68 gekoppelt. Bei der Zahnkupplung greift eine Nabe mit Steckverzahnung 64 und eine weitere Nabe mit Steckverzahnung 65 in eine innen verzahnte Kupplungshülse 67. Die Rotornabe 60 ist über ein Momentenlager 70 definiert an dem Maschinenträger 72 gelagert. Ebenso ist das Getriebegehäuse 74 an dem Maschinenträger 72 definiert gelagert, wobei ein Ausgleich von Relativbewegungen über die Zahnkupplung 66 erfolgt. Der Planetenträger 68 ist abtriebsseitig über ein Momentenlager 76 an dem Getriebegehäuse 74 gelagert. Die Rotornabe 60 und die Adapterwelle 62 als ein Stück ausgeführt sein. Die Nabe mit Steckverzahnung kann optional zu leichteren Herstellung der Steckverzahnung als Einzelteil ausgeführt sein und über eine formschlüssige Verbindung mit der Rotornabe 60, 62 verbunden werden.

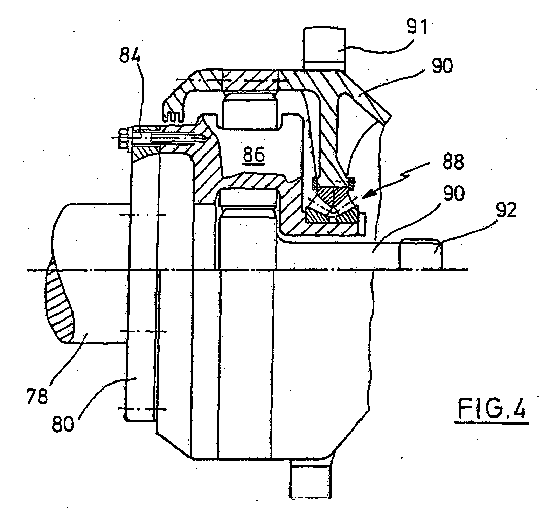

Figur 4 zeigt eine weitere bevorzugte Ausgestaltung, bei der das Getriebe als Aufsteckgetriebe ausgebildet ist. Wie bereits bei dem Aufsteckgetriebe aus Figur 1 ist die Rotorwelle 78 über einen Rotorwellenflansch 80 reib-/kraftschlüssig über eine Schraubverbindung 84 mit dem Planetenträger 86 verbunden. Das Getriebegehäuse 90 und damit das gesamte Getriebe ist auf dem Planetenträger 86 über ein Momentenlager 88 gelagert. Wie in Figur 4 deutlich zu erkennen, wird bei der Montage des Getriebes die Sonne 90 antriebsseitig in den Planetenträger 86 eingesetzt, wobei die Sonne 90 eine Steckverzahnung 92 zur Verbindung mit dem Planetenträger der zweiten Stufe aufweist. Das Getriebegehäuse 90 ist über eine Drehmomentstütze 91 abgestützt. Auch bei anderen Ausführungsbeispielen kann bei einer entsprechenden Dimensionierung des Planetenträgers und des Momentenlagers die Sonne antriebsseitig eingesetzt werden.

Die vorgestellten Ausführungsbeispiele lassen sich systematisch in der folgenden Tabelle zusammenfassen:

| | | | |
|---|---|---|---|
| Rotorlagerung | Ausführung Verbindung Planetenträger-Rotorwelle/-nabe | Getriebeanbindung an den Maschinenträger | |
| Momentenlager | Zahnkupplung (Steckverzahnung) | fest verschraubt | Planetenträger im Getriebegehäuse gelagert (Fig. 3) |
| | Kraft-/reibschlüssig | über Drehmomentstütze und Entkopplungselemente | Getriebegehäuse auf Planetenträger gelagert (Fig. 5) |
| 2-Punkt-Lagerung im einteiligen Gehäuse | Zahnkupplung (Steckverzahnung) | fest verschraubt | Planetenträger im Getriebegehäuse gelagert (Fig. 2) |
| | Kraft-/reibschlüssig | über Drehmomentstütze und Entkopplungselemente | Getriebegehäuse auf Planetenträger gela-gert (Fig. 1, 4) |
| 2-Punkt-Lagerung im zweiteiligen Gehäuse | Kraft-/reibschlüssig | über Drehmomentstütze und Entkopplungselemente | Getriebegehäuse auf Planetenträger gelagert (Fig. 1, 4) |

Die erste Spalte betrifft die Rotorlagerung: Hierbei wird unterschieden zwischen einer Momentenlagerung für den Rotor und einer Zwei-Punkt-Lagerung. Bei der Zwei-Punkt-Lagerung sind noch die Fälle zu unterscheiden zwischen einer Zwei-Punkt-Lagerung mit einem einteiligen Gehäuse und einer Zwei-Punkt-Lagerung mit einem zweiteiligen Gehäuse.

Die zweite Spalte bezeichnet die Verbindung zwischen Planetenträger und Rotorwelle/-nabe. Hier wird unterschieden zwischen einer Zahnkupplung, die als Steckverzahnung ausgeführt ist und einer kraft-/reibschlüssigen Verbindung, wie sie beispielsweise durch Verschrauben hergestellt werden kann. In der dritten Spalte dargestellt ist die Getriebeanbindung an den Maschinenträger. Hier wird unterschieden zwischen dem fest am Maschinenträger verschraubten Getriebe und dem über eine Drehmomentstütze und ein Entkopplungselement vorgesehenen Abstützung des Getriebes. In der Tabelle ist bereits deutlich zu erkennen, daß bei einer fest verschraubten Getriebeanbindung die Verbindung zwischen Planetenträger und Rotorwelle/-nabe über eine Zahnkupplung erfolgen muß. In der vierten Spalte dargestellt ist kurz das Lagerungsverhältnis vom Planetenträger zu Getriebegehäuse und die Figur, die eine entsprechende Ausgestaltung wiedergibt.

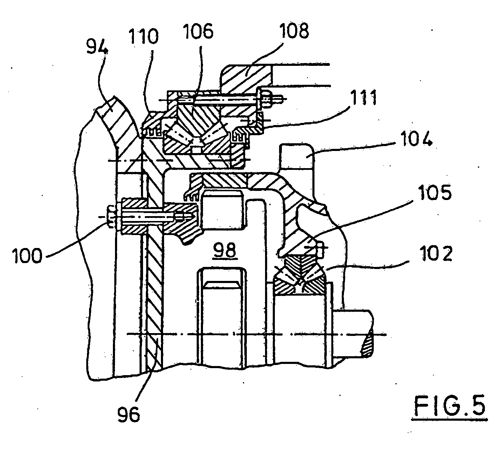

Ein weiteres Ausführungsbeispiel ist in Figur 5 dargestellt. Hierbei erfolgt wie bereits bei dem Ausführungsbeispiel aus Figur 3 eine Lagerung der Rotorwelle über ein Momentenlager. Die Rotornabe 94 ist über eine Adapterscheibe 96 mit dem Planetenträger 98 verbunden. Die Verbindung erfolgt reib- und kraftschlüssig über eine Schraubverbindung 100. Das Getriebegehäuse 105 ist über ein Momentenlager 102 an dem Planetenträger 98 gelagert und an einer Drehmomentenstütze 104 abgestützt.

Die Rotornabe 94 ist über ein zweites Momentenlager 106 als Rotorlager direkt am Maschinenträger 108 gelagert. Das Momentenlager 106 zur Lagerung der Rotorwelle ist über ein Dichtsystem 110 und 111 gegenüber äußeren Einflüssen abgedichtet. Das Momentenlager 106 befindet sich ungefähr im Bereich des Hohlrades 112 der ersten Planetenstufe. Die Rotornabe 94 und die Adapterscheibe 96 können als ein Teil ausgeführt sein.

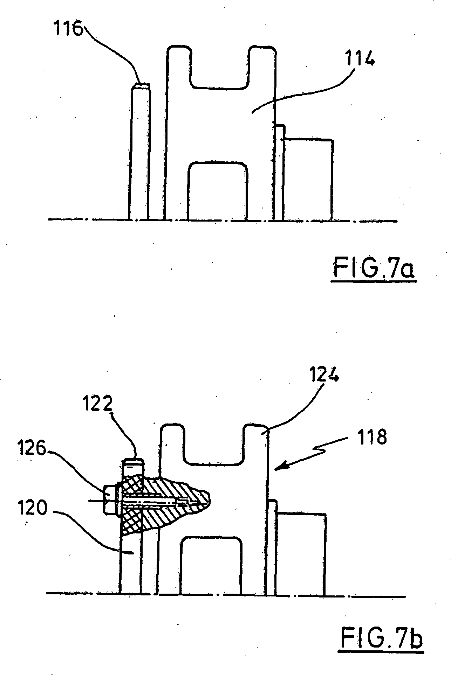

Figuren 7a und b zeigen in Detailansichten zwei unterschiedlich ausgestaltete Planetenträger 114 und 116. Der Planetenträger 114 ist einstückig ausgebildet und besitzt an seiner Antriebsseite eine Nabe einer Zahnkupplung, die mit einer außen liegenden Steckverzahnung versehen ist. Der Planetenträger 118 in Figur 7b ist zweistückig ausgebildet, wobei die Nabe einer Zahnkupplung mit außen liegender Steckverzahnung als Scheibe ausgeführt ist und mit dem Körper 124 des Planetenträgers 118 über Schrauben 126 verbunden ist.

## Patentansprüche

1. Getriebe für eine Windenergieanlage, mit einem Planetenträger (16, 52, 68, 86, 98), der antriebsseitig mit einer Rotorwelle (10, 48, 78) oder einer Rotornabe (94, 60) verbunden ist und über ein in einem Getriebegehäuse (20, 54, 74, 90, 105) angeordnetes Lager gelagert ist, das Lager (32, 58, 76, 88, 102) abtriebsseitig des Planetenträgers (16, 52, 68, 86, 98) in dem Getriebegehäuse (20, 54, 74, 90, 105) angeordnet ist, **dadurch gekennzeichnet, daß** als Lager für den Planetenträger ein Momentenlager (32, 58, 76, 88, 102) vorgesehen ist.

2. Getriebe nach Anspruch 1, **dadurch gekennzeichnet, daß** der Planetenträger (16, 52, 68, 86, 98) ein Planetenträger erster Stufe in einem mehrstufigen Planetengetriebe ist.

3. Getriebe nach Anspruch 1 oder 2, **dadurch gekennzeichnet, daß** als Momentenlager (32, 58, 76, 88, 102) ein eingestelltes Kegelrollenlagerpaar vorgesehen ist.

4. Getriebe nach Anspruch 1 oder 2, **dadurch gekennzeichnet, daß** als Momentenlager (32, 58, 76, 88, 102) ein dreireihiges Zylinderrollenlager vorgesehen ist.

5. Getriebe nach einem der Ansprüche 1 bis 4, **dadurch gekennzeichnet, daß** eine direkte Anbindung der Rotorwelle an den Planetenträger erfolgt.

6. Getriebe nach einem der Ansprüche 1 bis 4, **dadurch gekennzeichnet, daß** eine direkte Anbindung der Rotornabe an den Planetenträger erfolgt.

7. Getriebe nach einem der Ansprüche 1 bis 4, **dadurch gekennzeichnet, daß** eine Adapterscheibe zur Anbindung der Rotornabe an den Planetenträger (16, 52, 68, 86, 98) vorgesehen ist, wobei die Adapterscheibe mit dem Planetenträger verbunden ist.

8. Getriebe nach einem der Ansprüche 6 oder 7, **dadurch gekennzeichnet, daß** die Adapterscheibe oder die Rotornabe über ein Momentenlager als Rotorlager auf einer Tragkonstruktion (72) gelagert ist.

## Claims

1. A transmission for a wind turbine, with a planet carrier (16, 52, 68, 86, 98), which is connected at the input side with a rotor shaft (10, 48, 78) or a rotor hub (94, 60) and is mounted via a bearing arranged in a transmission housing (20, 54, 74, 90, 105), the bearing (32, 58, 76, 88, 102) is arranged on the output side of the planet carrier (16, 52, 68, 86, 98) in the transmission housing (20, 54, 74, 90, 105), **characterized in that** a torque bearing (32, 58, 76, 88, 102) is provided as the bearing for the planet carrier.

2. The transmission according to claim 1, **characterized in that** the planet carrier (16, 52, 68, 86, 98) is a planet carrier of the first stage in a multi-stage epicyclic gearbox.

3. The transmission according to claim 1 or 2, **characterized in that** an adjusted pair of taper roller bearings is provided as the torque bearing (32, 58, 76, 88, 102).

4. The transmission according to claim 1 or 2, **characterized in that** a three-row cylinder roller bearing is provided as the torque bearing (32, 58, 76, 88, 102).

5. The transmission according to one of claims 1 to 4, **characterized in that** there is a direct connection of the rotor shaft to the planet carrier.

6. The transmission according to one of claims 1 to 4, **characterized in that** there is a direct connection of the rotor hub to the planet carrier.

7. The transmission according to one of claims 1 to 4, **characterized in that** an adapter disk is provided for the connection of the rotor hub to the planet carrier (16, 52, 68, 86, 98), wherein the adapter disk is connected with the planet carrier.

8. The transmission according to one of claims 6 or 7, **characterized in that** the adapter disk or the rotor hub is mounted via a torque bearing as rotor bearing on a support (72).

## Revendications

1. Transmission pour une éolienne, comprenant une porteur d'engrenage planétaire (16, 52, 68, 86, 98) qui est reliée côté entraînement à un arbre de rotor (10, 48, 78) ou un moyeu de rotor (94, 60) et est attachée par un roulement disposé dans un logement de transmission (20, 54, 74, 90, 105), le roulement (32, 58, 76, 88, 102) est disposé côté sortie de la porteur d' engrenage planétaire (16, 52, 68, 86, 98) dans le logement de transmission (20, 54, 74, 90, 105) et **caractérisé en ce qu'**un roulementr de couple (32, 58, 76, 88, 102) est prévu en tant que roulement pour la porteur d' engrenage planétaire.

2. Transmission selon la revendication 1, **caractérisé en ce que** la porteur d' engrenage planétaire (16, 52, 68, 86, 98) est une porteur d'engrenage planétaire de premier étage dans un engrenage planétaire à plusieurs étages.

3. Transmission selon la revendication 1 ou 2, **caractérisé en ce qu'**une paire de roulements à rouleaux coniques réglée est prévue en tant que roulement de couple (32, 58, 76, 88, 102).

4. Transmission selon la revendication 1 ou 2, **caractérisé en ce qu'**un roulement à rouleaux cylindrique à trois rangées est prévu en tant que roulement de couple (32, 58, 76, 88, 102).

5. Transmission selon l'une quelconque des revendications 1 à 4, **caractérisé en ce qu'**une connexion directe de l'arbre de rotor à la porteur d' engrenage planétaire est effectuée.

6. Transmission selon l'une quelconque des revendications 1 à 4, **caractérisé en ce qu'**une connexion directe du moyeu de rotor à la porteur d' engrenage planétaire est effectuée.

7. Transmission selon l'une quelconque des revendications 1 à 4, **caractérisé en ce qu'**un disque adaptateur pour la connexion du moyeu de rotor à la porteur d' engrenage planétaire (16, 52, 68, 86, 98) est prévu, dans lequel le disque adaptateur est relié à la porteur d' engrenage planétaire.

8. Transmission selon l'une quelconque des revendications 6 ou 7, **caractérisé en ce que** le disque adaptateur ou le moyeu de rotor est attaché par le biais d'un roulement de couple en tant que roulement de rotor sur une construction de support (72).
